# EUROPEAN PATENT SPECIFICATION

(11) **EP 0 878 006 B1**
(45) Date of publication and mention of the grant of the patent: **23.02.2000**
(21) Application number: 95944580.0
(22) Date of filing: 29.12.1995
(51) Int. Cl.: G11B 19/02, G11B 19/12, G11B 19/06

(54) **A CD REPLAY DEVICE IN A PERSONAL COMPUTER AND A METHOD FOR CONTROLLING THE SAME**
CD-WIEDERGABEGERÄT IN EINEM PC UND STEUERUNGSVERFAHREN DAFÜR
DISPOSITIF DE LECTURE DE DISQUES COMPACTS DANS UN ORDINATEUR PERSONEL ET PROCEDE POUR COMMANDER CE DISPOSITIF

(30) Priority: 14.03.1995 JP 5387995
(43) Date of publication of application: 18.11.1998
(73) Proprietor: International Business Machines Corporation, Armonk, N.Y. 10504 (US); Kinoshita, Hidenori, Machida-shi, Tokyo (JP); Iwata, Shuichi, Yokohama-shi, Kanagawa-ken (JP)
(72) Inventor: KINOSHITA, Hidenori, Machida-shi, Tokyo (JP); IWATA, Shuichi, Yokohama-shi, Kanagawa-ken (JP)
(74) Representative: Ling, Christopher John
(86) International application number: US9517100
(87) International publication number: WO9628821

(56) References cited:
- GB-A- 2 234 105
- US-A- 4 939 601
- PATENT ABSTRACTS OF JAPAN vol. 011, no. 129 (P-570), 23 April 1987 & JP,A,61 271660 (MATSUSHITA ELECTRIC IND CO LTD), 1 December 1986,
- PATENT ABSTRACTS OF JAPAN vol. 009, no. 186 (P-377), 2 August 1985 & JP,A,60 055553 (TOYOTA JIDOSHA KK), 30 March 1985,
- PATENT ABSTRACTS OF JAPAN vol. 012, no. 480 (P-801), 15 December 1988 & JP,A,63 197047 (CLARION CO LTD), 15 August 1988,
- PATENT ABSTRACTS OF JAPAN vol. 012, no. 468 (P-797), 8 December 1988 & JP,A,63 187446 (HITACHI LTD), 3 August 1988,
- PATENT ABSTRACTS OF JAPAN vol. 015, no. 418 (P-1266), 23 October 1991 & JP,A,03 168971 (SANYO ELECTRIC CO LTD), 22 July 1991,
- PATENT ABSTRACTS OF JAPAN vol. 006, no. 183 (P-143), 18 September 1982 & JP,A,57 098150 (YOKOGAWA HOKUSHIN ELECTRIC CORP), 18 June 1982,
- PATENT ABSTRACTS OF JAPAN vol. 95, no. 010 & JP,A,07 282527 (CLARION CO LTD), 27 October 1995,

## Description

### FIELD OF THE INVENTION

The present invention relates to a personal computer having a CD replay device (CD-ROM drive) integrated therein, such that the CD replay device reads data recorded on the surface of a compact disk (CD) mounted on a tray in a CD player and to a method for controlling such a device. CD replay devices which are not incorporated in a computer are well known, such as, for example, as taught in US-A-4936601, JP-A-61271660, JP-A-63197047, JP-A-63187446, JP-A-3168971 and JP-A-57098150. In these devices, operating keys have different functions depending on how long they are depressed.

### BACKGROUND OF THE INVENTION

Compact, light personal computers (also called "portable computers" or "notebook computers") built from designs that take portability considerations into account are in wide use today. Also, as compact auxiliary storage devices have been produced, certain notebook computers are now available that can incorporate a CD-ROM drive (CD replay device) in addition to a hard disk drive (HDD) and a floppy disk drive (FCC). As an example, the ThinkPad 755CD (an IBM Corporation trademark), a notebook computer that is sold by IBM Japan, Ltd. Incorporates a CD-ROM drive.

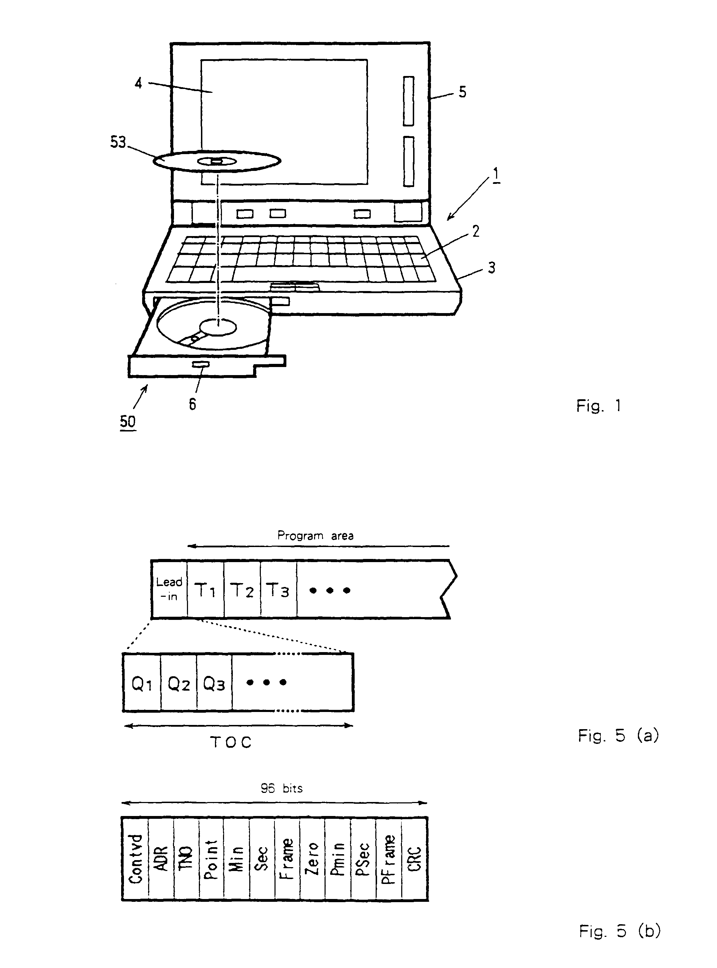

Fig. 1 shows an outline illustration of a notebook computer 1. The notebook computer 1 in Fig. 1 is so designed that a lid 5, which has an internally mounted liquid crystal display panel (LCD) 4, is rotatably hinged with a main body 3, almost at the rear edge of the main body 3. In the main body 3, which has a keyboard 2, are a CPU, a main memory, a ROM, peripheral controllers, and a system board on which is a bus by which these components (none of them shown) are connected. A battery pack (not shown), an HDD (not shown), and a CD-ROM drive 50 are incorporated in the lower space of the main body 3 beneath the keyboard 2. A disk tray for the CD-ROM drive 50 is slideably mounted under the main body 3 to facilitate the exchange of disks. On the front face of the disk tray 51, an ejection (Eject) button 6 is provided to control the ejection of the tray. At its rear, the CD-ROM drive 50 is attachably connected to the bus on the system board (not shown) and can be removed and replaced by another peripheral device, such as an FDD.

The recording on a CD, i.e., a compact disk (hereafter also referred to simply as a "disk"), is performed by forming pits (which have raised and depressed shapes that differ in reflectivity) that correspond to digital data on one face of a disk, which is formed of a transparent resin, and by overlaying an extremely thin metal film of, for example, aluminum and a further hard protective film. The CD-ROM drive (CD replay device) focuses a laser beam on a rotating disk, and employs the changes in the intensity of reflected light to read data. Since a great amount of data can be recorded on a CD at high density, a CD is employed for the recording not only of computer data but also of audio data, image data and various other data.

The physical and logical specifications for a CD were determined by a group of which Sony Corporation and Philips Ltd. were the central figures, and are described in a "Red Book," a "Yellow Book,". and a "Green Book," to use the common titles.

A CD is so designed that data are recorded spirally from the center of the disk surface to the outside and in the same density. The physical format is classified roughly into three areas: from the center of the disk face, a lead-in area, a program area, and a lead-out area. The lead-in and the lead-out areas are employed for recording attribute information for a disk and various control information concerning, for example, start positions for the individual tracks.

The program area is employed for recording the substantial user data, such as computer data and audio data, and is constituted by a single or a plurality of tracks. A track can be divided into frames that are 24 bytes long. The length of a track is not constant and varies depending on the length of the user data that are recorded. In case of a music CD, for example, one track corresponds to one piece of music, and the track length corresponds to the playing period.

A track on which computer data are recorded is called a "CD-ROM track," and a track on which audio track are recorded is called a "CD-DA track". In addition, as one type of a CD-DA, there is a "CD-Graphics" where image data are recorded in an empty area within the audio data (more specifically a sub channel in a frame). As another type, there is a hybrid CD having mixed CD-ROM tracks and CD-DA tracks. Also, as other standards, there are "CD-I (Compact Disk-Interactive media), where image data and audio data are recorded on a single track with an interleave factor (time- sharing multiplexing of a plurality of channels), and a "CD-ROM XA."

CD-DA specifications are given in a "Red Book," CD-ROM specifications are given in a "Yellow Book," and CD-I specifications are given in a "Green Book." The CD-I specifications prescribe the standards for enabling dialogue operation, and the CD-ROM XA specifications prescribe the standards for the combining of audio data with animated data and for their joint handling as multimedia.

Generally, in the same way as with other peripheral devices, a CD-ROM drive that is incorporated in a computer receives, through a bus, a command that is issued in software, such as an application program or an operating system (OS), so that it is controlled by a computer system (hereafter referred to simply as a "system"). The CD-ROM that replays a music CD is no exception. The starting and stopping of a read, and the head seek and set process for the next recorded musical piece will be discussed in detail.

To perform the reading of a music CD by an incorporated CDROM drive, it is assumed that at least three kinds of programs should be loaded into a main memory of the system: an application program for the music CD operation (hereafter referred, to as a "CD-PLAYER.EXE"), a file manager driver that permits an OS to manage a CD-ROM as an external storage device (MSCDEX. EXE, etc. ), and a device driver for a CD-ROM drive "CD-PLAYER.EXE" must be executed when a read operation is to be performed with a music CD. Since multitasking is not available with DOS environment, for example, the following procedures are required to run a music CD during the execution of another application (DOS word processing).
1. DOS word processing is temporarily terminated.
   (If a document is being prepared, it must be saved and the job is terminated.)
2. A mouse program is activated if it has not yet been loaded.
3. CD-PLAYER.EXE is executed.
4. A pertinent selection (replay, halt, etc.) from a
   Graphical User Interface (GUI) screen menu is made by pointing and clicking with a mouse and the results of the operation are relayed to CD-PLAYER.EXE.
5. CD-PLAYER.EXE is terminated.
6. DOS word processing is resumed.

Similarly, the following procedures are required to run a music CD during the execution of another application (Windows application) on Windows.
1. The display for the Windows application that is being executed is minimized by a mouse operation, or a task is switched by depressing a toggle switch on a keyboard to provide a program manager window. 2. The icon of a program group wherein a CD-PLAYER icon is registered is opened.
3. The CD-PLAYER icon is double-clicked to activate CD-PLAYER.EXE and a desired menu selection is clicked in the CD-PLAYER window. By referring to the above explanation, it would be understood by one having ordinary skill in the art that, conventionally, playing a music CD on a computer presents the following difficulties.

### (1) Interruption of an application that is being executed.

To control the starting or halting of replaying, a dedicated application, i.e., "CD PLAYER.EXE," must be activated every time. A bus is normally used to input data at a keyboard or with a mouse, and to transmit a command to a CD-ROM drive. Since an interrupt occurs at a CPU, an application that is being executed is inevitably suspended.

### (2) Use of system resources.

For frequent playing of music CDs, an application for operating a music CD (e.g., CD-PLAYER.EXE) and specific drivers, such as a file manager driver (e.g., MSCDEX.EXE) and a device driver, have to be resident in main memory. Since a CD-PLAYER.EXE program is generally from 70 to 200 kilobytes, and since each of the drivers is about 35 kilobytes, together, these programs constitute a considerably large load on the system resources.

### (3) Operability.

To play a music CD during the execution of another application, the application must be temporarily terminated and CD-PLAYER.EXE must be activated (in the DOS environment), or windows must be switched and the CD-PLAYER icon must be selected and operated (in the Windows environment). Also, the initiating operation is comparatively complicated. Since the user interface differs for each application, this is another factor that contributes to the complication and the difficulty of the operation.

In such an environment, even when a computer user becomes tired because of the work being done (e.g., the preparation of a document by word processing) and decides to listen to music to relax, the operation to replay a music CD requires the interruption of an application or the above described input operations. This is troublesome for a user.

Further, there are some applications (e.g., CD-PLAYER.EXE) that do not permit "working while listening to music"; and even if the replaying of a music CD can be performed, it is terminated when such application is ended. Even when an application can be terminated and the original application (e.g., word processing) can be restarted while a music CD is being replayed, the application must be activated each time for a succeeding music CD operation (the head seek-and-set process for playing the next recorded musical piece, or the playing 'halt), and further manipulation and time are required. It is clear that if several tens to several hundreds of kilobytes in a main memory are always used merely for audio data processing, not for computer data processing, system resources are wasted. In other words, although a user has installed a CD replay device in a computer system, such user cannot easily be refreshed by listening to music whenever desired.

On the other hand, since dedicated CD replay devices for playing music CDs are equipped, as a standard, with special control buttons for individual operations, such as replay start, replay halt, and the head seek-and-set process for the next musical piece, a user can replay music CDs freely, any time desired. As for an incorporated CD-ROM drive, however, generally, only the front face of a disk discharge tray appears on the surface of the computer main body 1, as is shown in Fig. 1. On such a limited surface, at most only an ejection button 6 is provided, and the addition of other control buttons increases manufacturing costs. Therefore, the operation of an incorporated CD-ROM drive relies on input that is performed at a keyboard or with a mouse. Accordingly, the operation of the CD-ROM drive requires the use of the bus and the interruption of an application program that is being executed.

### SUMMARY OF THE INVENTION

It is an object of the present invention to provide a CD-ROM drive that is incorporated in a computer and that can easily run a music CD without interrupting an application that is being executed on said computer, and to a method for controlling such a CD-ROM drive.

A personal computer according to a first aspect of the invention is defined in claim 1. Methods according to second, third and fourth aspects of the invention are defined in claims 4, 6 and 8, respectively.

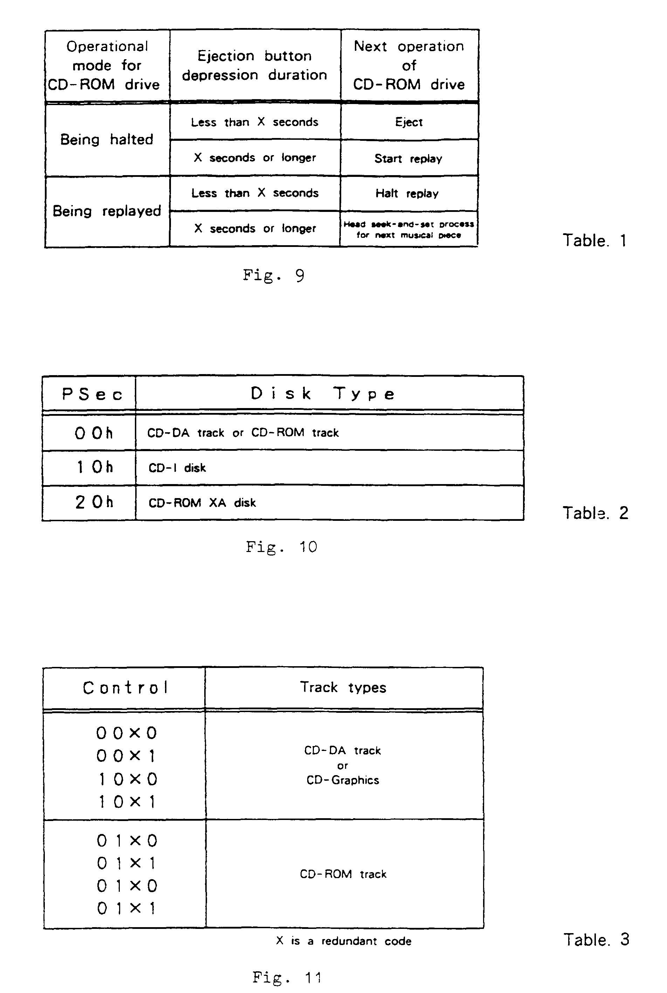

According to the present invention, when an ejection button is depressed during the halting or the replaying, the CD-ROM drive performs operations that are shown in the Table of Fig. 9.

As is apparent from Fig. 9, a CD-ROM drive according to the present invention can employ a single ejection button to instruct all of the operations, such as the start of the replaying for a music CD, the halting of its replaying, the head seek-and-set process for a succeeding musical piece, and the ejection of the CD. "X seconds" in the Table of Fig. 9 is determined by using a default value that is given in advance or by the firmware setup within n the CD-ROM drive. The value of X may be dynamically reset by using a jumper switch or by entering a system command. In article D-2 of the embodiments below, x = 2 [sec.].

An ejection button is one of the standard features of an incorporated type CD-ROM drive, as is shown in Fig. 1, and thus does not increase the manufacturing costs. Since the operations that are shown in Fig. 9 can be performed by firmware within the CD-ROM drive, they have no effect at all on the design of a notebook computer system.

According to the present invention, when a user needs to take a break by listening to music while working (e.g., preparing a document by word processing), the user can realize such a desire simply by depressing an ejection button.

The basic operations, such as the start of replaying for a music CD, the halting of the replaying, and the head seek-and-set process for the succeeding musical piece, can be performed without involving any computer system control functions. The computer system does not have to terminate the application that is being executed. Therefore, no special effort nor time need be expended by a user to play a music CD, and "working while listening to music" is a concept that can be easily realized, depending on the mood of the moment.

In addition, an application (CD-PLAYER.EXE) for the operation of a music CD does not have to be loaded into the main memory of the computer system. Further, it is not necessary for MSCDEX.EXE and a device driver for a CD-ROM drive to be resident in the main memory simply for the replaying of a music CD. Therefore, the present invention saves on the system resource requirements.

Other objects, features, and advantages of the present invention will become obvious from the detailed description of the following embodiment that is given while referring to the accompanying drawings.

### BRIEF DESCRIPTION OF THE DRAWINGS

Fig. 1 is an outline view of a notebook computer having a built-in CD-ROM player;
Fig. 2 is a schematic diagram of the hardware arrangement of a preferred embodiment of the present invention;
Fig. 3 is a schematic diagram of the hardware arrangement of a CD-ROM player used with the embodiment of Fig. 2;
Fig. 4a is a perspective plan view of a surface of a compact disk (CD);
Fig. 4b is schematic diagram showing the physical format of a CD such as that shown in Fig. 4a;
Fig. 5a is a schematic diagram of the program area and the Table of Contents (TOC) arranged on a CD;
Fig. 5b is a schematic diagram of the field structure of one of the channels arranged on a CD;
Fig. 6 is a flowchart of the operation when a disk in the CD-ROM drive is replaced;
Fig. 7 is a schematic diagram of the recorded contents of the Random Access Memory (RAM) after the processing of the flowchart of Fig. 6 is completed;
Fig. 8 is a flowchart of the operationi when the ejection button of the CD-ROM drive is depressed;
Fig. 9 is a table of the operations performed when the ejection button is depressed;
Fig. 10 is a table showing the relationship between PSec Field values and compact disk types; and
Fig. 11 is a table showing the relationship between the Control field values and disk track types.

### DESCRIPTION OF THE PREFERRED EMBODIMENTS

Referring to the drawings, the description of the embodiment of the present invention will be divided into the following articles for convenience
A. Hardware arrangement of a computer
B. Hardware arrangement of a CD-ROM drive
C. Data structure of a compact disk
D. Operation of a CD-ROM drive
E. Appendix

### A. Hardware arrangement of a computer

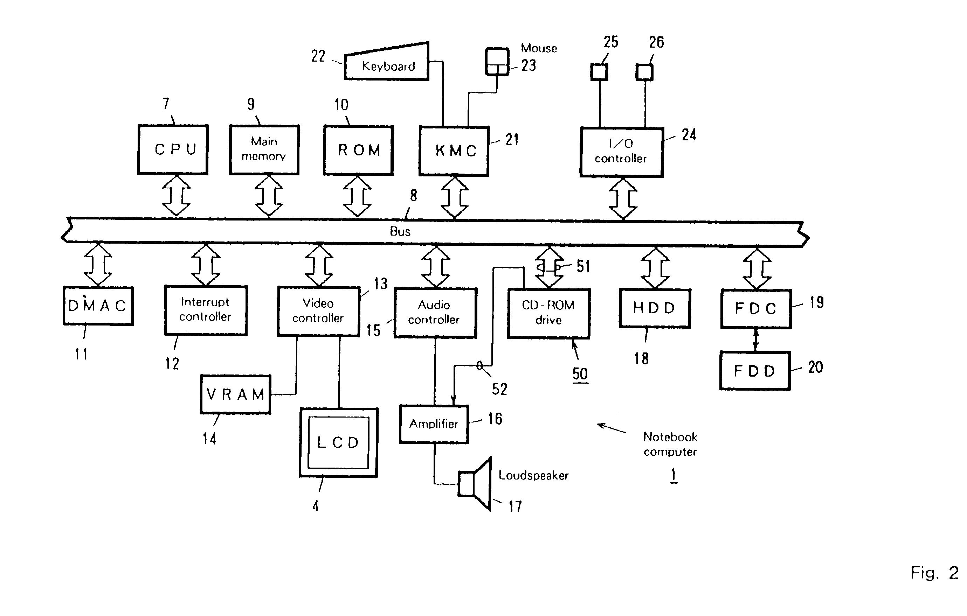

Fig. 2 is a schematic diagram illustrating the hardware arrangement of a notebook.computer 1 that is employed to carry out the present invention.

In Fig. 2, a Central Processing Unit (CPU) 7 executes an application program under the control of an operating system (OS). The CPU 7 communicates with the individual sections by means of a transfer path (bus) 8 for the transmission of common signals such as address signals, data signals, and control signals. The individual components will now be explained.

A main memory 9 is a volatile memory, Random Access Memory (RAM), into which the individual programs are loaded and that serves as a work area for the CPU 7. A Read Only Memory (ROM) 10 is a non-volatile memory in which a POST (Power On Self Test) program and a BIOS (Basic Input/Output System) for hardware control are encoded and permanently stored.

A Direct Memory Access Controller (DMAC) 11 is a special processor by which data are transferred between the main memory 9 and peripheral devices without passing through the CPU 7.

An interrupt controller 12 is a processor that monitors the bus 8 and reports to the CPU 7 any occurrence of interrupt on the bus 8. A video controller 13 is a processor that processes a video command from the CPU 7. A VRAM 14 is a processor that temporarily stores video data that are being processed. An LCD 4 is a device that displays the contents of the VRAM 14.

An audio controller 15 is a processor that handles the input and the output of audio signals. An audio signal is amplified by an amplifier 16 and the amplified signal is output through a loudspeaker 17. The amplifier 16 receives an analog signal also from a CD-ROM drive 50 via a signal line 52 (which will be described later).

An HDD 18 and an FDD 20 are auxiliary storage devices. An FDC 19 is a controller that drives the FDD 20.

In addition to the HDD 18 and the FDD 20, the notebook computer 1 includes a CD-ROM drive 50 as an auxiliary storage device. The CD-ROM drive 50 is connected via the bus 8 to a bus connector 51 for the exchange of commands and of digital data, and outputs analog data directly to the amplifier 16 via the signal line 52 (the details will be explained in article B).

An I/O controller 24 is a controller that enables data exchange with a modem or a printer (not shown) via a serial port 25 and a parallel port 26.

The computer 1 includes a keyboard 22 and a mouse 23 with which a user inputs data and commands. An input matrix from the keyboard 22 and pointed coordinates from the mouse 23 are processed by a keyboard/mouse controller (KMC) 21.

The components in the hardware arrangement of the computer 1 that are described in this article are well known to one having ordinary skill in the art. Besides these components in Fig. 2, there are various other hardware components (controllers, interface circuits, peripheral devices, etc.) that constitute a notebook computer. It would be understood for one having ordinary skill in the art that to simplify the explanation some components are not shown in this specification.

### B. Hardware arrangement of a CD-ROM drive

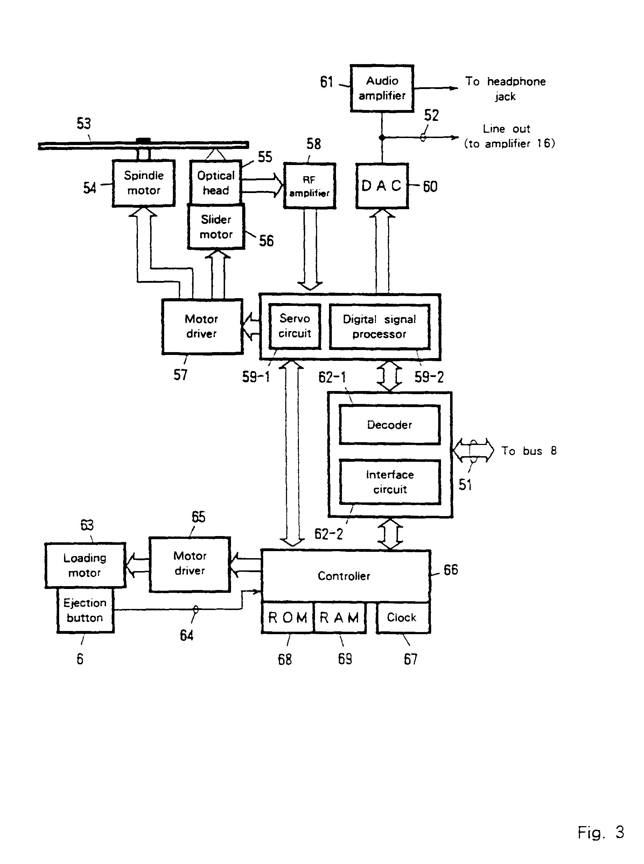

Fig. 3 shows the hardware arrangement of the incorporated CD-ROM drive 50 that is employed to carry out the principles of the present invention. The individual components of the CD-ROM drive 50 will be explained.

A compact disk (CD) 53, which is a recording medium, is rotatably mounted on a spindle motor 54. An optical head (Pick-Up-Head) 55 is located under the lower surface of the disk 53. To read data, the optical head 55, which transmits a laser beam to the disk 53 and receives its reflected beam, is mounted on a slider motor 56 that can be shifted in a direction of the radius of the disk 53. A motor driver 57 controls the or spindle motor 54 and the slider motor 56 so as to rotate the tracks of the disk 53 at constant linear velocity (CLV) relative to the optical head 55.

A signal that is outputted by the optical head 55 is transmitted to an RF amplifier 58 to control the position of the optical head 55 and to read data from the disk 53. For the position control, a closed loop control system, which includes a servo circuit 59-1 and the motor driver 57, synchronously drives the spindle motor 54 and the slider motor 56 in response to the output signal from the optical head 55. This permits access by the optical head 55 to a predetermined position on the disk 53. The optical head 55 is supported by a double-axis device (not shown) that can be shifted slightly, and thus focusing correction and tracking correction are permitted.

For the reading of data on the disk 53, a signal that is output from the optical head 55 is processed by a digital signal processor (DSPI) 59-2 and the resulting signal is converted into an analog signal by a digital-analog converter (DAC) 60. The analog signal is amplified by an audio amplifier 61, and the amplified signal is outputted either through a headphone jack (not shown) of the CD-ROM drive 50, or from the line out terminal to the amplifier 16 of the computer 1 via the signal line 52. To output the read-out data as digital data, the data are decoded by a decoder 62-1 and the decoded data are then transmitted to the bus 8 of the computer I via the bus connector 51. In this embodiment, the servo circuit 59-1 and the digital signal processor 59-2 are constructed as a single chip.

A tray (see Fig. 1), on which the disk 53 is placed so as to be exchangeable is coupled to a loading motor 63, so that the tray can be inserted and ejected. An ejection button 6 is a control button that is provided on the front face of the CD-ROM drive 50 (see Fig. 1) to control operations, such as the insertion/ejection of the tray. When the ejection button 6 is depressed, it sends a signal via a signal line 64 to a controller or command mechanism 66. The motor driver 65 thereafter drives the loading motor 63 in response to a control signal received from the controller 66.

The controller 66 controls the individual sections in the CD-ROM drive 50. More specifically, the controller or command mechanism 66 performs a predetermined process on a signal that is received from the ejection button 6 via the signal line 64. It controls the operations of the CD-ROM drive 50, such as the reading of data from the surface of the disk 53 and the halting of the reading. It controls the insertion and ejection of the tray (the details will be described in article D-2). In addition, the controller 66 includes a clock 67 for counting operational timing, a ROM 68, and a RAM 69.

The ROM 68 is a read only memory for permanently storing data and is employed for recording various firmware. The firmware includes, for example, (A) code for a self-test that the drive 50 performs when powered on, (B) code for the interpretation of a command that is received from the computer 1 via the bus 8, (c) code for the confirmation of the state of the drive 50, such as disk in/out or tray in/out, and (d) code for the mechanical control in the drive 50. A program that accomplishes the operation that will be described in article D and a software timer that measures the period that the ejection button 6 is depressed are included in the firmware in the ROM 68.

The RAM 69 is a writable memory that is employed as a work area for the controller 66. In the RAM 69 is stored a variety of information about a disk that is currently loaded (e.g., file allocation information such as TOC (which will be described later)), a drive parameter that indicates a data transfer speed, and an audio parameter that indicates a sound output level.

An interface circuit 62-2, which permits the exchange of digital data by the bus 8 of the.computer 1 and the CD-ROM drive 50, is connected to the bus 8 via the bus connector 51. As for the standards for an interface that connects the CD-ROM 50 to the bus 8 of the personal computer 1, although in addition to the SCSI and Enhanced IDE standards there are others that have been specified by individual makers, no limitations are imposed on interface standards for the realization of the present invention.

SCSI is an abbreviation of Small Computer System Interface, and the standards for peripheral interfaces, for a compact computer, which are standardized by the Americal National Standards Institute (ANSI). IDE is an abbreviation of Integrated Drive Electronics, and is one of the interfaces that are used to directly connect a hard disk to an ISA bus. Enhanced IDE is an enhanced version for a CD-ROM drive.

In this embodiment, the decoder 62-1 and the interface circuit 62-2 are constituted as a single chip.

The hardware arrangement of- the CD-ROM drive 50 explained in this article (except for the firmware in the ROM 68 that is used for specific operations that will be explained in article D) is well known to one having ordinary skill in the art. Although the CD-ROM drive 50 includes hardware components other than those shown in Fig. 3, those components are well known and to simplify the description no explanation are given for them in this specification.

It should be noted that when audio data in an arbitrarily CD-DA track on the disk 53 are read and converted into an analog signal by the DA converter 60, and the converted analog signal is output from the line out terminal 52 to the amplifier 16 of the computer 1, or is amplified by the audio amplifier 61 and the amplified signal is output to a headphone, the replaying of a music CD can be performed. While replaying a music CD,, the CD-ROM drive 50 does not require any exchange of commands and data via the bus connector 51, i.e., does not use the bus 8 of the computer 1 at all.

### C. Data structure of a compact disk

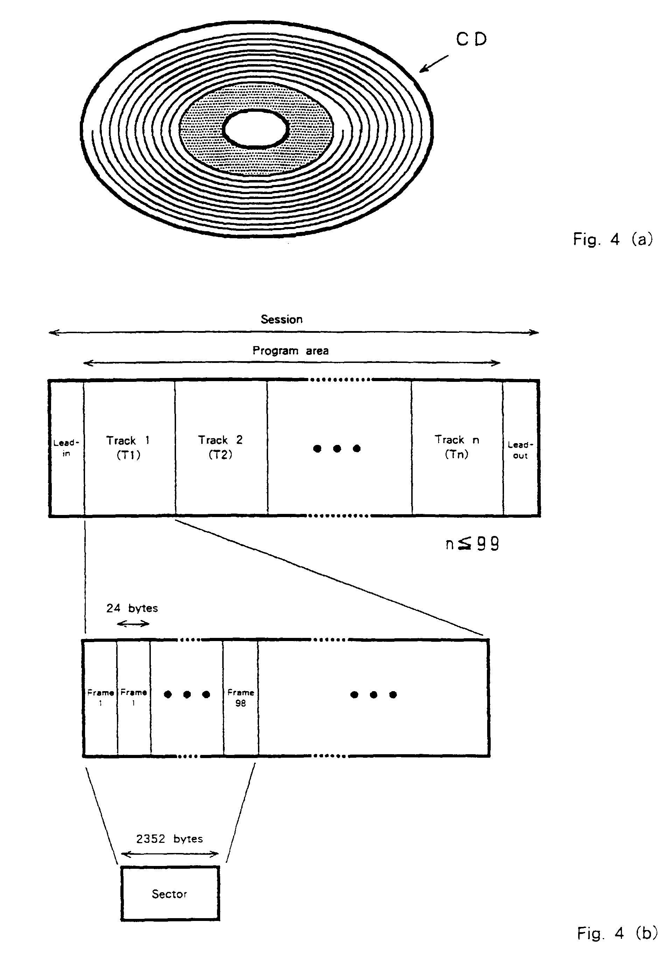

An explanation has been given in "Background of the Invention" that data are recorded spirally on the disk surface with the same density, and spiralling from the center, the data area is divided into a lead-in area, a program area, and a lead-out area (see Fig. 4). In this article, to simplify the explanation in article D, the physical format of a CD will be explained in more detail.

Fig. 4(b) is a schematic diagram showing a physical format of a CD. One session is so formed that a program area that is substantially user data is sandwiched between a lead-in area and a lead-out area. Although a CD normally carries only one session (single-session), a "Photo CD" on which photographic images are recorded is a multi-loading type that carries a plurality of sessions (multi-session). Since the Photo CD does not include audio data (CD-DA tracks), it can not be used with this embodiment of the present invention.

A maximum of 99 tracks can be stored in the program area. One CD-DA track corresponds to one piece of music and the number of tracks in a disk that is dedicated to music corresponds to the number of musical pieces. One track can be further divided into frames. A frame is the minimum unit for data processing, and consists of 24 bytes. A group of 98 sequential frames (2352 byte length) is called a sector. The length of a track is not constant. In the case of a CDDA track, the number of sectors that is included in one track is determined according to the playing period for a music piece.

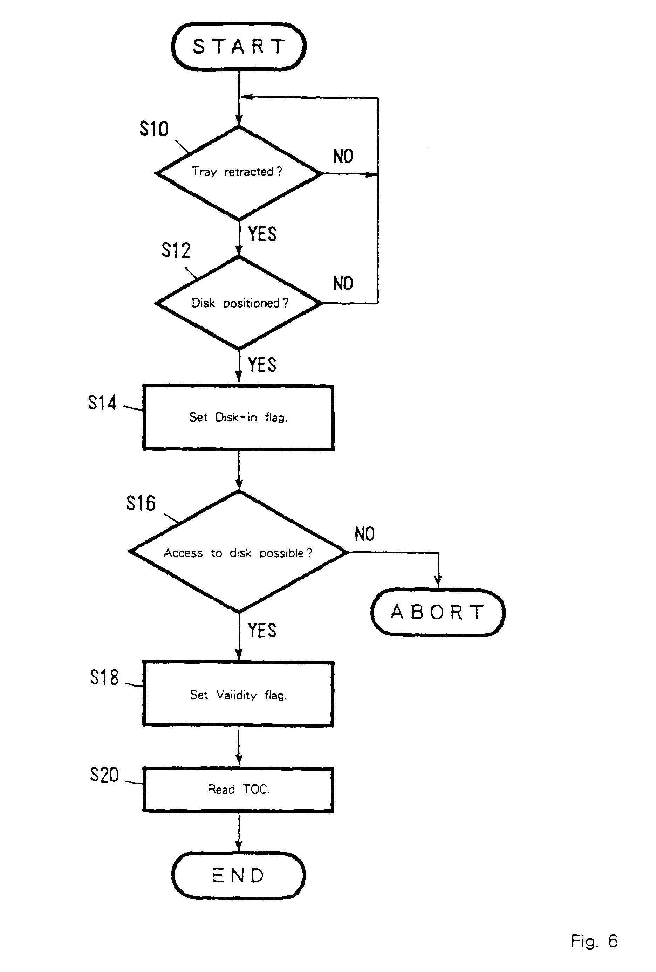

Various control information, such as attribute information and start positions of tracks, are recorded in the lead-in area and the lead-out area. In the lead-in area is stored a table, a so-called TOC (Table Of Contents), for managing attribute information and control information on the disk by track units. As is shown in Fig. 5(a), in the TOC, one record that consists of 96 bits, a socalled "Q channel," is prepared for each track, and the Q channels are stored in the order of the tracks in the program area. The data structure of a Q channel conforms to a field structure (called a "Q format") that is shown in Fig. 5(b), and data for the tracks are stored in the corresponding fields.

Values that are stored in the individual fields (Control, ADR, in the Q channel are employed during a track seek on the CD or when the data in the track are read. Especially, the control field value and the PSec field value are employed for the operation of the CD-ROM drive 50, which will be described in the succeeding article D, and will therefore be but briefly explained below.

The PSec field is employed to represent a disk type. The Table of Fig. 10 shows the relationship between PSec Field values and disk types. According to Fig. 10, when PSec = OOh, the disk consists of CD-DA tracks (including CD-Graphics), CD-ROM tracks, or hybrid CD-DA tracks and CD-ROM tracks. In other words, when PSec = OOh, the disk may include audio data (CD-DA tracks). When PSec = lOh, the disk is a CD-I type, and when PSec = 20h, the disk is a CD-ROM XA type. Therefore, with any value other than PSec = 00h, the disk does not include audio data in a CD-DA format (i.e., in a format that is not interleaved).

Generally, tracks with different PSec values do not coexist on a single disk. Whether or not a disk includes a CD-DA track can be determined by referring to one PSec value of an arbitrary single Q channel in the TOC.

The control field is employed to represent a corresponding track type. The Table of Fig. 11 shows the relationship between the Control field values and track types. According to Fig. 11, when the second bit from the top is "O," its corresponding track is a CD-DA or CD-Graphics type. When that bit is "1," its corresponding track is a CD-ROM type. In this manner, whether or not a corresponding track is a CD-DA type (audio data) can be determined by referring to the second bit from the top in the Control field in the Q channel.

The physical format for a CD that is shown in Figs. 4 and 5 is a well known format that was determined by Sony Corporation and Philips Ltd.

### D. Operation of a CD-ROM drive

The hardware arrangement and the other arrangement that practices the principles of the present invention have been explained in articles A through C. In article D, the operation of the CD-ROM 50 that employs these arrangements will be explained. The operation of the CD-ROM 50 can be performed by the firmware in the ROM 68 (Fig. 3).

### D-1. Operation when a compact disk is exchanged

The operation when a compact disk in the CD-ROM drive 50 is exchanged will be explained in this article while referring to the flowchart in Fig. 6.

Following the insertion of the tray of the CD-ROM 50 at step S10, at step S12, a check is performed to determine whether or not a disk exists on the tray. The presence of the disk can be easily determined by detecting the amount of light that the optical head 55 has received.

If the decision at step S12 is affirmative, at step S14, a Disk-in flag that indicates the presence of a disk is set at predetermined address #bbbb in the RAM 69, and program control advances to step S16. If the decision at step S12 is negative, program control branches to No and returns to the initial step.

At step S16, a check is performed to determine whether or not access of the loaded disk is possible. This check is required because sometimes data can not be read out due to a dirty disk surface or a scratched disk surface. When the decision at step S16 is affirmative, at step S18, a Validity flag, indicating that access of the disk has been validated, is set at predetermined address #cccc in the RAM 69. Program control then advances to step S20. When the decision at step S16 is negative, the further process steps for accepting the disk is not performed and the processing is terminated in failure (ABORT).

At step S20, the TOC is read out by accessing the lead-in area, which is located inward on the disk, and is stored at predetermined address #aaaa and its following address in the RAM 69.

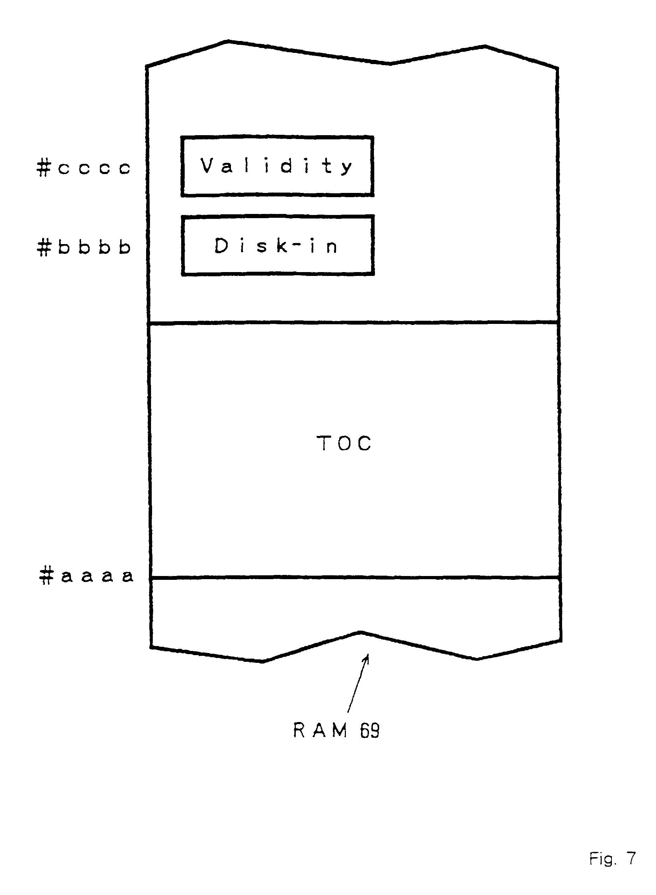

Fig. 7 is a specific diagram showing the recorded contents in the RAM 69 after the processing in tlle flowchart in Fig. 6 is terminated successfully. The controller 66 does not use, as work areas, the areas in the RAM 69 where the TOC and these flags are stored. The stored TOC and flags are saved until the next replacement of the disk (or the ejection of the tray).

The operation shown in Fig. 6 is a normal disk replacement operation that is performed in almost all current CD-ROM drives, regardless of whether or not the present invention is employed. It should be noted that to store the TOC of a loaded disk at a predetermined address in the RAM 69 and to set a Disc-in flag and a Validity flag (or data equivalent to these flags) are requirements for performing an operation in the succeeding article D-2.

### D-2. Operation when an ejection button is depressed

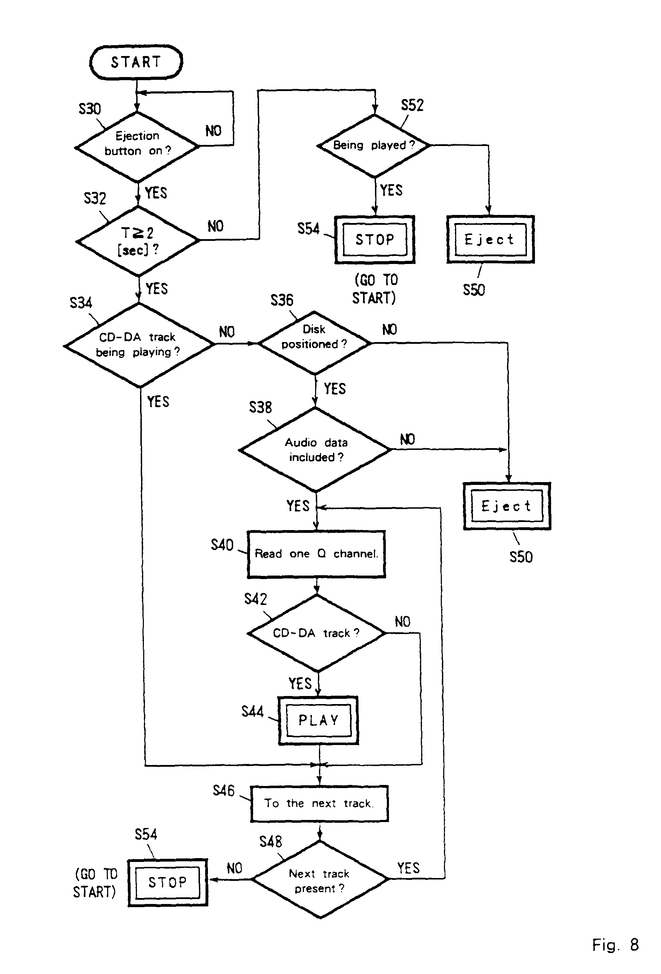

The operation performed when an ejection button of the CDROM drive 50 is depressed will now be described while referring to the flowchart in Fig. 8.

When the ejection button 6 of the CD-ROM drive 50 is depressed at step S30, a depression time T is counted at step S32. The counting of the time T is performed by the software timer (previously described) of the ROM 68. When T is two seconds or longer, program control branches to Yes and advances to step S34. When T is shorter than two seconds, program control branches to No and moves to step S52. In this embodiment, a period of two seconds is predetermined by the firmware in the ROM 68, but may be dynamically altered by a jumper switch or a system command.

At step S34, a check is performed to determine whether or not a CD-DA track on a disk is being replayed.

When the decision at step S34 is negative, the depression for two seconds or longer at step S30 is regarded as a request for the "replaying of a music CD." Program control then branches to No and moves to step S36, and a check is performed to determine whether or not an accessible disk is positioned on the tray. The determination is made by examining whether or not the Disk-in flag and the Validity flag have been set at the respective addresses #bbbb and #cccc in the RAM 69.

At step S38, a check is performed to determine whether or not there is a possibility that audio data (a CD-DA track) exists on the loaded disk. The determination is made by accessing the TOC, which is stored at a predetermined address. following address #aaaa in the RAM 69, and by referring to a value in the PSec field of an arbitrary Q channel. When PSec = 00h, the decision at step S38 is affirmative. When PSec has another value, the result at step S38 is negative.

When the result at one of steps S36 and S38 is negative, the depression of the ejection button 6 at step S30 is regarded as a request for "tray ejection." Program control thus advances to step S50 ([Eject]) where the tray is ejected. When the results at both steps S36 and S38 are affirmative, at step S40, one of the Q channels is read from the head of the TOC that is stored in the RAM 69. Then, at step S42, by referring to the second bit from the top of the Control field value in the Q channel, a check is performed to determine whether or not a corresponding track is a CD-DA track.

If the decision at step S42 is affirmative, program control advances to step S44 ((PLAY]) where that track is played (i.e., the music CD is played). When the playing of the track has been completed, program control advances to step S46, where a seek is performed for.the next track. If the decision at step S42 is negative (that is, the track is not a CD-DA track), the track playing at step S44 is skipped and a seek is performed for the next track at step S46. When, at step S48, the next track is found as the result of the seek procedure at step S46, program control branches to Yes and returns to step S40. The same process is repeated. By the performance of such loop processing, CD-DA tracks on the disk are sequentially found and music is played. When, at step S48, no next track is found, all the CD-DA tracks on the disk have been played. Program control thus branches to No and moves to step S54 ([STOP]).

When, at step S34, the playing of a CD-DA track on the disk has begun, the depression of the ejection button 6 for two seconds or longer that was performed at step S30 is regarded as a request for a "head seek-and-set process for the next musical piece." Program control then branches to Yes and goes to step S46, where a seek is performed for the next track and the same process as is described above is performed.

If, at step S32, the depression time for the ejection button 6 is less than two seconds, program control branches to No and goes to step S52. At step S52, a check is performed to determine whether or not the CD-DA track on the disk is being played. When playing has begun, the depression of the ejection button 6 is regarded as a request for "halting the playing of a music CD." Program control branches to Yes and goes to step S54 ([STOP]). When the playing of the CD-DA track is not being performed, the depression of the ejection button 6 is regarded as a request for a "tray ejection." Program control branches to No and moves to step S50 ([EJECT]).

It would be easily inferred that steps S44, S50, and S54, which are enclosed by double lines in Fig. 8, correspond respectively to (PLAY (play start)], [EJECT], and (STOP (play halt)] buttons.

In short, through the processing in the flowchart in Fig. 8, the controller or command mechanism 66 monitors the depression of the ejection button 6, and the combination of the manipulation of the ejection button 6 and the operational state of the CD-ROM drive 50 accomplishes the individual operations relative to a music CD. It should be fully understood that this processing is the core of the concept of the present invention. It should also be fully understood that terms "play" and "replay" in this specification indicate that audio data in a CD-DA track on the loaded disk are read, converted into analog data by the DA converter 60, and outputted without any change. Further, it should be noted that the bus connector 51 (i.e., the bus 8 of the computer 1) is not used for the operation of a music CD.

In this embodiment, only a CD-DA track is employed for replaying. However, it would be obvious that, so long as audio data that are interleaved and recorded can be decoded inside the CD-ROM drive, the concept of the present invention can be applied for a track conforming to CD-I format or CD-ROM XA format.

The present invention has been described in detail while referring to the specific illustrated embodiment. However, it should be obvious for one having ordinary skill in the art that various modifications or revisions of the embodiment are possible within the scope of the present invention as defined by the appended claims. For example, while a notebook computer is employed for the explanation of the embodiment of the present invention, a CD replay device according to the present invention can also be employed with other types of portable information processing apparatus (such as word processors or other OA devices).

As described above in detail, according to the present invention, it is possible to provide a CD replay device that can be incorporated in a notebook computer and that can easily replay a music CD without interrupting an application, which is being executed by a computer system, and to a method for controlling such a CD replay device.

An ejection button itself is one of the standard features for an incorporated CD-ROM drive, as is shown in Fig. 1, and thus does not increase the manufacturing costs. Since the operations as shown in Fig. 9 can be performed inside the CD-ROM drive by firmware, the design of a notebook computer system is not affected at all.

The basic operations, such as the beginning of the replaying of a music CD, the halting of the replaying, and the head seekand-set process for the next piece of music, can be performed without requiring the control of a computer system, and the computer system does not have to terminate the application that is being executed. Therefore, when a user desires to relax by listening to music, the gratification of the desire can be obtained simply by depressing the ejection button, so that "working while listening to music" is a concept that can be easily realized, depending on the mood of the moment.

Further, since it is not necessary for an application for operating a music CD and a device driver for a CD-ROM drive to be resident in the main memory of a computer system, system resources can be saved.

## Claims

1. A personal computer having a CPU (7) and an integrated CD-ROM drive (50) wherein the CD-ROM drive is adapted replay audio data from a surface of a CD mounted in the CD-ROM drive without interrupting an application program being executed by the computer, wherein said CD-ROM drive is characterized in that it includes:
a single control means (66,68,69) directly manually operable by a user without intervention of said CPU for controlling both the reading of data from said CD and the ejection of said CD from said replay device when said control means is operated; and
timing means (6,66,67,68) for timing the period during which said control means is operated and for comparing it to a predetermined time period, and wherein: said control means ejects said CD from said CD-ROM drive if said control means is operated for a time period less than said predetermined time period while said CD is halted and said CD-ROM drive replays audio data from the surface of said CD if said control means is operated for a time period equal to or longer than said predetermined time period while said CD is halted.

2. A computer having a CD replay device as claimed in claim 1 wherein said surface of said CD has a plurality of tracks thereon and said control means halts the reading of audio data from said surface of said CD when said control means has been operated for a time period less than said predetermined time period during the reading of a track on said surface and said control means begins the reading of said surface on a different track when said control means has been operated for a time period equal to or longer than said predetermined time period during the reading of a track.

3. A computer as claimed in claims 1 or 2 wherein said control means includes an ejection button (6) and is operated when said button is depressed.

4. A method for operating a personal computer having a CPU (7) and a CD-ROM drive (50) integrated therein such that the CD-ROM drive can replay audio data from a CD mounted in the CD-ROM drive without interrupting an application program being executed by the computer, said CD-ROM drive including a single control means (66,68,69) directly manually operable by a user without intervention of said CPU for controlling the ejection of said CD, with said CD having a plurality of tracks, said method being characterized by the steps of:
halting the replaying of said CD when said control means has been depressed for a period of time that is less than a predetermined time during the replaying of said CD; and beginning the replaying of the next track on said CD when said control means has been depressed for said predetermined time or longer during the replaying of said CD.

5. A method as claimed in claim 5 wherein said control means includes an ejection button (6) which is operated by depressing the button.

6. A method for operating a personal computer having a CPU (7), a computer system with a main memory (9), a CD-ROM drive (50) integrated into said personal computer through a common bus (8) such that the CD-ROM drive can replay audio data from a CD mounted in the CD-ROM drive without interrupting an application program being executed by the computer, with said CD-ROM drive comprising:
a tray on which a CD is placed, a discharge mechanism (63,65) for inserting and ejecting said CD from said tray, an ejection buttom (6) to control the ejection of said tray, a read mechanism (55,56,57) for seeking data on a surface of said CD and for reading said data, a data processor (59-2) for processing data, a line out terminal (52) for relaying an analog output of said data, an interface (62-2) for connecting said CD-ROM drive to said bus and a controller (66) for controlling all the operations, said method being characterized by:
initiating the operation of said discharge mechanism for discharging said CD if said ejection button is depressed for a period that is shorter than a predetermined time while said read mechanism is halted;
beginning data reading by said read mechanism if said ejection button is depressed for said predetermined time or longer while said read mechanism is halted; and
outputting the data read from said line out terminal.

7. A method as defined in claim 6 further characterized by:
skipping the track position on said CD to a succeeding track when said ejection button is depressed for said predetermined time period or longer and said data is being read by said read mechanism.

8. A method for operating a personal computer having a CPU (7), a computer system with a main memory (9), a CD-ROM drive (50) integrated in said personal computer through a common bus (8) such that the CD-ROM drive can replay audio data from a CD mounted in the CD-ROM drive without interrupting an application program being executed by the computer, said CD-ROM drive comprising a tray on which a CD having a plurality of tracks is placed, a discharge mechanism (63,65) for inserting and ejecting said tray, an ejection button (6) to control the ejection of said tray, a read mechanism (55,56,57) for seeking data on a surface of said CD and for reading said data, a data processor (59-2) for processing data, a line out terminal (52) for relaying an analog output of said data that are read, an interface (62-2) for connecting said CD-ROM drive to said bus, and a controller (66) for controlling all the operations, wherein data is read from a CD-DA track and an analog output of said data can be transmitted from said line out terminal, said method being characterized by:
a timing step (S32) of timing a period during which said ejection button is depressed;
a first decision step (S34) of determining whether or not a CD-DA track is being read if, at said timing step said period is of a predetermined period or longer;
a second decision step (S36) of determining whether or not a CD has been placed on said tray if, at said first decision step, it is determined that no reading of CD-DA track is being performed;
a third decision step (S38) of determining whether or not a CD-DA track is included on said CD if, at said second decision step, it is determined that a CD is placed on said tray;
a seeking step (S40,S42,S46,S48) of seeking the next CD-DA track if, at said third decision step, it is determined that a CD-DA track is included on said CD; and
a playing step (S44) of read data from the CD-DA track that is found at said seeking step and of providing at said line out terminal an analog output of said data that is read.

9. A method according to claim 8, wherein when the data reading from the CD-DA track has been completed at said playing step, a following CD-DA track is sought (S46,S48) on said CD and said playing step is repeated.

10. A method according to claim 9, wherein, if the result obtained by either one of said first (S32) and said third (S36) decision steps is negative and no CD is being played, said tray is ejected by said discharge mechanism, and/or wherein
if it is determined that data are being read from said CD-DA track at said first decision step (S34), a following CD-DA track on said CD is sought and data from such a following CD-DA track is replayed, and/or wherein
if a period during which said ejection button is depressed is less than said predetermined time at said timing step (S32), a check is performed (S52) to determine whether or not data are being read from said CD, and if data are being read, said data reading is halted, and if data reading is not being performed, said tray is ejected by said discharge mechanism.

## Patentansprüche

1. Personal Computer, der eine Zentraleinheit (CPU) (7) und ein integriertes CD-ROM-Laufwerk (50) aufweist, wobei das CD-ROM-Laufwerk geeignet ist, Audiodaten von einer Oberfläche einer CD wiederzugeben, die in dem CD-ROM-Laufwerk eingelegt ist, ohne ein Anwendungsprogramm zu unterbrechen, das gerade vom Rechner ausgeführt wird, wobei das CD-ROM-Laufwerk dadurch gekennzeichnet ist, dass es Folgendes enthält:
ein einzelnes Steuermittel (66, 68, 69), das ohne Eingriff der CPU von einem Benutzer direkt manuell betrieben werden kann, um sowohl das Lesen von Daten von der CD als auch den Auswurf der CD aus dem Wiedergabegerät zu steuern, wenn das Steuermittel betrieben wird; und
Zeitsteuerungsmittel (6, 66, 67, 68), um den Zeitraum zu steuern, während dessen das Steuermittel betrieben wird, und um ihn mit einem vorher festgelegten Zeitraum zu vergleichen, und wobei
das Steuermittel die CD aus dem CD-ROM-Laufwerk auswirft, wenn das Steuermittel für die Dauer eines Zeitraums betrieben wird, der kürzer als der vorher festgelegte Zeitraum ist, während dessen die CD angehalten wird, und das CD-ROM-Laufwerk Audiodaten von der Oberfläche der CD wiedergibt, wenn das Steuermittel für die Dauer eines Zeitraums betrieben wird, der gleich dem oder länger als der vorher festgelegte Zeitraum ist, während dessen die CD angehalten wird.

2. Rechner mit einer CD-Wiedergabeeinheit nach Anspruch 1, wobei die Oberfläche der CD eine Vielzahl von Spuren aufweist und das Steuermittel das Lesen von Audiodaten von der Oberfläche der CD anhält, wenn das Steuermittel während des Lesens einer Spur auf der Oberfläche für die Dauer eines Zeitraums betrieben wurde, der kürzer als der vorher festgelegte Zeitraum ist, und wobei das Steuermittel mit dem Lesen der Oberfläche auf einer anderen Spur beginnt, wenn das Steuermittel während des Lesens einer Spur für die Dauer eines Zeitraums betrieben wurde, der gleich dem oder länger als der vorher festgelegte Zeitraum ist.

3. Rechner nach Anspruch 1 oder 2, wobei das Steuermittel eine Auswurftaste (6) enthält und betrieben wird, wenn die Taste gedrückt wird.

4. Verfahren zum Betreiben eines Personal Computers, der eine Zentraleinheit (CPU) (7) und ein CD-ROM-Laufwerk (50) aufweist, die so integriert sind, dass das CD-ROM-Laufwerk Audiodaten von einer CD wiedergeben kann, die in dem CD-ROM-Laufwerk eingelegt ist, ohne ein Anwendungsprogramm zu unterbrechen, das gerade vom Rechner ausgeführt wird, wobei das CD-ROM-Laufwerk ein einzelnes Steuermittel (66, 68, 69) enthält, das ohne Eingriff der CPU von einem Benutzer direkt manuell betrieben werden kann, um den Auswurf der CD zu steuern, wobei die CD eine Vielzahl von Spuren aufweist, wobei das Verfahren durch die folgenden Schritte gekennzeichnet ist:
Anhalten der Wiedergabe der CD, wenn das Steuermittel während der Wiedergabe der CD für die Dauer eines Zeitraums gedrückt wurde, der kürzer als ein vorher festgelegter Zeitraum ist; und Beginnen der Wiedergabe der nächsten Spur auf der CD, wenn das Steuermittel während der Wiedergabe der CD für die Dauer des vorher festgelegten Zeitraums oder länger gedrückt worden ist.

5. Verfahren nach Anspruch 5, wobei das Steuermittel eine Auswurftaste (6) enthält, die durch Drücken betätigt wird.

6. Verfahren zum Betreiben eines Personal Computers, der eine Zentraleinheit (CPU) (7), ein Rechnersystem mit einem Hauptspeicher (9) und ein CD-ROM-Laufwerk (50) aufweist, die über einen gemeinsamen Bus (8) so in den Personal Computer integriert sind, dass das CD-ROM-Laufwerk Audiodaten von einer CD wiedergeben kann, die in dem CD-ROM-Laufwerk eingelegt ist, ohne ein Anwendungsprogramm zu unterbrechen, das gerade vom Rechner ausgeführt wird, wobei das CD-ROM-Laufwerk Folgendes umfasst:
ein Fach, in das eine CD eingelegt wird, einen Freigabemechanismus (63, 65), um die.CD in das Fach einzulegen und aus dem Fach auszuwerfen, eine Auswurftaste (6), um den Auswurf aus dem Fach zu steuern, einen Lesemechanismus (55, 56, 57), um Daten auf einer Oberfläche der CD zu suchen und um die Daten zu lesen, einen Datenprozessor (59-2), um Daten zu verarbeiten, einen Ausgangsanschluss (52), um eine Analogausgabe der Daten weiterzuleiten, eine Schnittstelle (62-2), um das CD-ROM-Laufwerk mit dem Bus zu verbinden, und eine Steuereinheit (66), um alle Operationen zu steuern, wobei das Verfahren durch Folgendes gekennzeichnet ist:
Einleiten des Betriebs des Freigabemechanismus, um die CD freizugeben, wenn die Auswurftaste für die Dauer eines Zeitraums gedrückt wird, der kürzer als ein vorher festgelegter Zeitraum ist, während der Lesemechanismus angehalten wird;
Beginnen mit dem Lesen der Daten durch den Lesemechanismus, wenn die Auswurftaste für die Dauer des vorher festgelegten Zeitraums oder länger gedrückt wird, während der Lesemechanismus angehalten wird, und Ausgeben der Daten, die von dem Ausgangsanschluss gelesen wurden.

7. Verfahren nach Anspruch 6, das des Weiteren dadurch gekennzeichnet ist, dass
von der Spurposition auf der CD auf eine nachfolgende Spur gesprungen wird, wenn die Auswurftaste für die Dauer des vorher festgelegten Zeitraums oder länger gedrückt wird und die Daten gerade von dem Lesemechanismus gelesen werden.

8. Verfahren zum Betreiben eines Personal Computers, der eine Zentraleinheit (CPU) (7), ein Rechnersystem mit einem Hauptspeicher (9) und ein CD-ROM-Laufwerk (50) aufweist, die über einen gemeinsamen Bus (8) so in den Personal Computer integriert sind, dass das CD-ROM-Laufwerk Audiodaten von einer CD wiedergeben kann, die in dem CD-ROM-Laufwerk eingelegt ist, ohne ein Anwendungsprogramm zu unterbrechen, das gerade vom Rechner ausgeführt wird, wobei das CD-ROM-Laufwerk ein Fach umfasst, in das eine CD eingelegt wird, die eine Vielzahl von Spuren aufweist, einen Freigabemechanismus (63, 65), um das Fach einzufahren und auszufahren, eine Auswurftaste (6), um das Ausfahren des Fachs zu steuern, einen Lesemechanismus (55, 56, 57), um Daten auf einer Oberfläche der CD zu suchen und um die Daten zu lesen, einen Datenprozessor (59-2), um Daten zu verarbeiten, einen Ausgangsanschluss (52), um eine Analogausgabe der gelesenen Daten weiterzuleiten, eine Schnittstelle (62-2), um das CD-ROM-Laufwerk mit dem Bus zu verbinden, und eine Steuereinheit (66), um alle Operationen zu steuern, wobei Daten von einer CD-DA-Spur gelesen werden und eine Analogausgabe der Daten von dem Ausgangsanschluss übertragen werden kann, wobei das Verfahren durch Folgendes gekennzeichnet ist:
einen Zeitsteuerungsschritt (532), in dem ein Zeitraum gesteuert wird, während dessen die Auswurftaste gedrückt wird;
einen ersten Entscheidungsschritt (534), in dem festgestellt wird, ob gerade eine CD-DA-Spur gelesen wird, wenn der Zeitraum in dem Zeitsteuerungsschritt von einer vorher festgelegten oder einer längeren Dauer ist;
einen zweiten Entscheidungsschritt (536), in dem festgestellt wird, ob eine CD in das Fach eingelegt worden ist, wenn in dem ersten Entscheidungsschritt festgestellt wird, dass die CD-DA-Spur gerade nicht gelesen wird;
einen dritten Entscheidungsschritt (538), in dem festgestellt wird, ob eine CD-DA-Spur auf der CD enthalten ist, wenn in dem zweiten Entscheidungsschritt festgestellt wird, dass eine CD in das Fach eingelegt worden ist;
einen Suchschritt (540, 542, 546, 548), in dem die nächste CD-DA-Spur gesucht wird, wenn in dem dritten Entscheidungsschritt festgestellt wird, dass auf der CD eine CD-DA-Spur enthalten ist; und
einen Schritt der Wiedergabe (544) von Daten, die von der CD-DA-Spur gelesen werden, welche in dem Suchschritt gefunden wurde, und der Bereitstellung einer Analogausgabe der Daten, die gelesen werden, an dem Ausgangsanschluss.

9. Verfahren nach Anspruch 8, wobei eine folgende CD-DA-Spur auf der CD gesucht (546, 548) und der Wiedergabeschritt wiederholt werden, nachdem das Lesen der Daten von der CD-DA-Spur in dem Schritt der Wiedergabe abgeschlossen worden ist.

10. Verfahren nach Anspruch 9, wobei das Fach von dem Freigabemechanismus ausgefahren wird, wenn das durch den ersten Entscheidungsschritt (532) oder den dritten Entscheidungsschritt (536) erhaltene Ergebnis negativ ist und keine CD wiedergegeben wird, und/oder wobei
eine folgende CD-DA-Spur auf der CD gesucht wird und Daten von dieser folgenden CD-DA-Spur wiedergegeben werden, wenn in dem ersten Entscheidungsschritt (534) festgestellt wird, dass gerade Daten von der CD-DA-Spur gelesen werden, und/oder wobei,
wenn in dem Zeitsteuerungsschritt (532) ein Zeitraum, während dessen die Auswurftaste gedrückt wird, kürzer als der vorher festgelegte Zeitraum ist, eine Prüfung durchgeführt wird (552), um festzustellen, ob gerade Daten von der CD gelesen werden, und wenn gerade Daten gelesen werden, wird das Lesen der Daten angehalten, und wenn keine Daten gelesen werden, wird das Fach von dem Freigabemechanismus ausgefahren.

## Revendications

1. Ordinateur personnel comportant une unité centrale (7) et une unité de CD-ROM intégrée (50) dans lequel l'unité de CD-ROM est conçue pour reproduire des données audio à partir d'une surface d'un disque compact monté dans l'unité de CD-ROM sans interrompre un programme d'application qui est exécuté par l'ordinateur, dans lequel ladite unité de CD-ROM est caractérisée en ce qu'elle comprend :
un seul moyen de commande (66, 68, 69) directement actionnable manuellement par un utilisateur sans intervention de ladite unité centrale pour commander à la fois la lecture des données à partir dudit disque compact et l'éjection dudit disque compact à partir dudit dispositif de reproduction lorsque ledit moyen de commande est actionné ; et
un moyen de temporisation (6, 66, 67, 68) pour compter la durée pendant laquelle ledit moyen de commande est actionné et pour la comparer à une durée prédéterminée, et dans lequel :
ledit moyen de commande éjecte ledit disque compact de ladite unité de CD-ROM si ledit moyen de commande est actionné pendant une durée inférieure à ladite durée prédéterminée alors que ledit disque compact est arrêté et ladite unité de CD-ROM reproduit les données audio à partir de la surface dudit disque compact si ledit moyen de commande est activé pendant une durée égale ou plus longue que ladite durée prédéterminée alors que le disque compact est arrêté.

2. Ordinateur comprenant un dispositif de reproduction de disque compact selon la revendication 1, dans lequel ladite surface dudit disque compact comporte une pluralité de pistes sur celui-ci et ledit moyen de commande arrête la lecture des données audio à partir de ladite surface dudit disque compact lorsque ledit moyen de commande a été actionné pendant une durée inférieure à ladite durée prédéterminée pendant la lecture d'une piste sur ladite surface et ledit moyen de commande commence la lecture de ladite surface sur une piste différente lorsque ledit moyen de commande a été actionné pendant une durée égale ou plus longue que ladite durée prédéterminée pendant la lecture d'une piste.

3. Ordinateur selon la revendication 1 ou 2, dans lequel ledit moyen de commande inclut un bouton d'éjection (6) et est actionné lorsque ledit bouton est enfoncé.

4. Procédé pour mettre en oeuvre un ordinateur personnel comportant une unité centrale (7) et une unité de CD-ROM (50) intégrées dans celui-ci d'une manière telle que l'unité de CD-ROM peut reproduire des données audio à partir d'un disque compact monté dans l'unité de CD-ROM sans interrompre un programme d'application qui est exécuté par l'ordinateur, ladite unité de CD-ROM incluant un seul moyen de commande (66, 68, 69) directement actionnable manuellement par un utilisateur sans intervention de ladite unité centrale pour commander l'éjection dudit disque compact, ledit disque compact comportant une pluralité de pistes, ledit procédé étant caractérisé par les étapes consistant à :
arrêter la reproduction dudit disque compact lorsque ledit moyen de commande a été enfoncé pendant une durée qui est plus courte qu'une durée prédéterminée pendant la reproduction dudit disque compact ; et commencer la reproduction de la piste suivante sur ledit disque compact lorsque ledit moyen de commande a été enfoncé pendant ladite durée prédéterminée ou plus longtemps pendant la reproduction dudit disque compact.

5. Procédé selon la revendication 4, dans lequel ledit moyen de commande inclut un bouton d'éjection (6) qui est activé en enfonçant le bouton.

6. Procédé pour mettre en oeuvre un ordinateur personnel comportant une unité centrale (7), un système d'ordinateur avec une mémoire principale (9), une unité de CD-ROM (50) intégrée dans ledit ordinateur personnel par l'intermédiaire d'un bus commun (8) d'une manière telle que l'unité de CD-ROM peut reproduire des données audio à partir d'un disque compact monté dans l'unité de CD-ROM sans interrompre un programme d'application qui est exécuté par l'ordinateur, ladite unité de CD-ROM comprenant :
un plateau sur lequel un disque compact est placé, un mécanisme de déchargement (63, 65) pour insérer et éjecter ledit disque compact dudit plateau, un bouton d'éjection (6) pour commander l'éjection dudit plateau, un mécanisme de lecture (55, 56, 57) pour rechercher les données sur une surface dudit disque compact et pour lire lesdites données, un processeur de données (59-2) pour traiter les données, une borne de sortie de ligne (52) pour relayer une sortie analogique desdites données, une interface (62-2) pour connecter ladite unité de CD-ROM audit bus et un contrôleur (66) pour commander la totalité des opérations, ledit procédé étant caractérisé par les étapes consistant à :
initier l'opération dudit mécanisme de déchargement pour décharger ledit disque compact si ledit bouton d'éjection est enfoncé pendant une durée qui est plus courte qu'une durée prédéterminée alors que ledit mécanisme de lecture est arrêté ;
commencer la lecture des données par ledit mécanisme de lecture si ledit bouton d'éjection est enfoncé pendant ladite durée prédéterminée ou plus longtemps alors que ledit mécanisme de lecture est arrêté ; et
sortir les données lues à partir de ladite borne de sortie de ligne.

7. Procédé selon la revendication 6, caractérisé en outre par l'étape consistant à :
sauter la position de la piste sur ledit disque compact jusqu'à une piste suivante lorsque ledit bouton d'éjection est enfoncé pendant ladite durée prédéterminée ou plus longtemps et que lesdites données sont lues par ledit mécanisme de lecture.

8. Procédé pour mettre en oeuvre un ordinateur personnel comportant une unité centrale (7), un système d'ordinateur avec une mémoire principale (9), une unité de CD-ROM (50) intégrée dans ledit ordinateur personnel par l'intermédiaire d'un bus commun (8) d'une manière telle que l'unité de CD-ROM peut reproduire des données audio à partir d'un disque compact monté dans l'unité de CD-ROM sans interrompre un programme d'application qui est exécuté par l'ordinateur, ladite unité de CD-ROM comprenant un plateau sur lequel un disque compact comportant une pluralité de pistes est placé, un mécanisme de déchargement (63, 65) pour insérer et éjecter ledit plateau, un bouton d'éjection (6) pour commander l'éjection dudit plateau, un mécanisme de lecture (55, 56, 57) pour rechercher des données sur une surface dudit disque compact et pour lire lesdites données, un processeur de données (59-2) pour traiter les données, une borne de sortie de ligne (52) pour relayer une sortie analogique desdites données qui sont lues, une interface (62-2) pour connecter ladite unité de CD-ROM audit bus et un contrôleur (66) pour commander la totalité des opérations, dans lequel les données sont lues à partir d'une piste CD-DA et une sortie analogique desdites données peut être transmise à partir de la borne de sortie de ligne, ledit procédé étant caractérisé par :
une étape de temporisation (S32) consistant à compter une durée pendant laquelle ledit bouton d'éjection est enfoncé ;
une première étape de décision (S34) consistant à déterminer si oui ou non une piste CD-DA est lue si, à ladite étape de comptage, ladite durée est d'une durée prédéterminée ou plus longue ;
une seconde étape de décision (S36) consistant à déterminer si oui ou non un disque compact a été placé sur ledit plateau si, à ladite première étape de décision, on détermine qu'aucune lecture de piste CD-DA n'est effectuée ;
une troisième étape de décision (S38) consistant à déterminer si oui ou non une piste CD-DA est incluse sur ledit disque compact si, à ladite seconde étape de décision, on détermine qu'un disque compact est placé sur ledit plateau ;
une étape de recherche (S40, S42, S46, S48) consistant à rechercher la piste CD-DA suivante si, à ladite troisième étape de décision, on détermine qu'une piste CD-DA est incluse sur ledit disque compact ; et
une étape de reproduction (S44) des données lues à partir de la piste CD-DA qui est trouvée au moment de ladite étape de recherche et consistant à délivrer sur ladite borne de sortie de ligne une sortie analogique desdites données qui sont lues.

9. Procédé selon la revendication 8, dans lequel lorsque les données lues à partir de la piste CD-DA ont été achevées à ladite étape de reproduction, une piste CD-DA suivante est recherchée (S46, S48) sur ledit disque compact et ladite étape de reproduction est répétée.

10. Procédé selon la revendication 9, dans lequel, si le résultat obtenu par l'une desdites première (S32) et dite troisième (S36) étapes de décision est négatif et qu'il n'y a pas de disque compact qui est reproduit, ledit plateau est éjecté par ledit mécanisme de déchargement, et/ou dans lequel
si on détermine que les données sont lues à partir de ladite piste CD-DA à ladite première étape de décision (S34), une piste CD-DA suivante sur ledit disque compact est recherchée et les données à partir d'une telle piste CD-DA suivante sont reproduites et/ou dans lequel
si une durée pendant laquelle ledit bouton d'éjection est enfoncé est plus courte que ladite durée prédéterminée à ladite étape de comptage (S32), une vérification est effectuée (S52) pour déterminer si oui ou non les données sont lues à partir dudit disque compact et si les données sont lues, ladite lecture de données est arrêtée, et si la lecture des données n'est pas effectuée, ledit plateau est éjecté par ledit mécanisme
